(19) Europäisches Patentamt
European Patent Office
Office européen des brevets

(11) **EP 1 651 891 B1**

(12) **EUROPÄISCHE PATENTSCHRIFT**

(45) Veröffentlichungstag und Bekanntmachung des Hinweises auf die Patenterteilung:
**03.10.2007 Patentblatt 2007/40**

(21) Anmeldenummer: **04739020.8**

(22) Anmeldetag: **05.08.2004**

(51) Int Cl.:
*F16K 1/36* *(2006.01)*     *F16K 7/20* *(2006.01)*

(86) Internationale Anmeldenummer:
**PCT/DK2004/000523**

(87) Internationale Veröffentlichungsnummer:
**WO 2005/015066 (17.02.2005 Gazette 2005/07)**

(54) **FLUIDSTEUERVENTIL, INSBESONDERE WARMWASSERVENTIL**

FLUID CONTROL VALVE, PARTICULARLY HOT WATER VALVE

VANNE DE COMMANDE DE FLUIDE, EN PARTICULIER VANNE POUR EAU CHAUDE

(84) Benannte Vertragsstaaten:
**AT BE BG CH CY CZ DK EE ES FI FR GB GR HU IE IT LI LU MC NL PL PT RO SE SI SK TR**

(30) Priorität: **07.08.2003 DE 10336922**

(43) Veröffentlichungstag der Anmeldung:
**03.05.2006 Patentblatt 2006/18**

(73) Patentinhaber: **Danfoss A/S**
**6430 Nordborg (DK)**

(72) Erfinder:
• **GRAVERSEN, Niels, Peter**
**DK-6440 Augustenborg (DK)**
• **GASPERIC, Joze**
**SI-1000 Ljubljana (SI)**

(56) Entgegenhaltungen:
**EP-A- 1 193 430**     **DE-A- 2 451 346**
**DE-A- 2 525 243**     **DE-B- 1 098 311**
**DE-U- 7 107 034**     **GB-A- 2 341 223**
**US-A- 2 397 269**

• **PATENT ABSTRACTS OF JAPAN Bd. 2000, Nr. 22, 9. März 2001 (2001-03-09) & JP 2001 129440 A (MARKTEC CORP), 15. Mai 2001 (2001-05-15)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 651 891 B1

**Beschreibung**

Die Erfindung betrifft ein Flüssigkeitssteuerventil, insbesondere Warmwasserventil, mit zwei Ventilelementen, nämlich einem Ventilsitz und einem mit dem Ventilsitz in einem Berührungsbereich zusammenwirkenden Schließelement, und einer Betätigungseinrichtung, wobei eines der beiden Ventilelemente zumindest auf seiner dem anderen Ventilelement zugewandten Seite mit einem elastomeren Element versehen ist, und von den beiden Ventilelementen Zumindest eines eine Vorkontaktzone aufweist, in der eine Berührung zwischen dem Ventilsitz und dem Schließelement auf einen vorbestimmten Teilbereich des Berührungsbereichs beschränkt ist, die ein vorbestimmtes Verformungsverhalten aufweist und einer Annäherung von Schließelement und Ventilsitz eine vorbestimmte Gegenkraft entgegensetzt.

Flüssigkeitsteuerventile werden beispielsweise verwendet, um einen Wasserstrom zu steuern. Die Betätigungseinrichtung arbeitet hierbei vielfach in Abhängigkeit von äußeren oder inneren Einflußfaktoren, beispielsweise einer Wassertemperatur. Dabei besteht die Gefahr einer Instabilität in der Regelung, wenn der Zusammenhang zwischen dem Regelsignal und dem Durchfluß konstant gehalten wird. Dies ist insbesondere der Fall bei Durchlauferhitzern von Fernheizungen, wenn nur wenig warmes Wasser gezapft wird. In diesem Fall ist der Abstand zwischen dem Ventilsitz und dem Schließelement nur gering und es können Schwingungen entstehen.

Dieses Problem läßt sich dadurch etwas verringern, daß man den Zusammenhang zwischen der Hubhöhe des Ventils und der Durchflußmenge mit einem progressiven Verlauf gestaltet. Dies ist aber in der Regel nur möglich, wenn das Ventil eine größere Hubhöhe aufweist. Wenn die Hubhöhe klein ist, ist es schwierig, den progressiven Verlauf zu erreichen.

Bei Ventilen mit kleineren Dimensionen und/oder mit kleineren Hubhöhen kann man eine Dämpfungsfeder verwenden, die in Öffnungsrichtung auf das Schließelement wirkt. Diese Dämpfungsfeder verstärkt die Kraftwirkung in die Öffnungsrichtung, wenn sich das Ventil in Schließstellung oder dicht davor befindet. Die erhöhte Federkraft bewirkt, daß eine erhöhte Schließkraft erforderlich ist, um das Schließelement letztendlich bis zur Anlage an den Ventilsitz zu bringen, und damit ein erhöhtes Schließsignal.

Allerdings erfordert eine derartige Dämpfungsfeder eine genaue Justierung während der Herstellung. Dies ist ein zeitraubender, kostenaufwendiger und umständlicher Prozeß.

Der Erfindung liegt die Aufgabe zugrunde, auf einfache Weise eine progressive Ventilkennlinie erzeugen zu können.

Diese Aufgabe wird bei einem Ventil der eingangs genannten Art (siehe z.B. GB 2341223A) dadurch gelöst, daß von den beiden Ventil-elementen zumindest eines eine Vorkontaktzone aufweist, in der eine Berührung zwischen dem Ventilsitz und dem Schließelement auf einen vorbestimmten Teilbereich des Berührungsbereichs beschränkt ist, die ein vorbestimmtes Verformungsverhalten aufweist und einer Annäherung von Schließelement und Ventilsitz eine vorbestimmte Gegenkraft entgegensetzt.

Mit dieser Vorkontaktzone ist es möglich, ohne zusätzliche Dämpfungsfeder im letzten Abschnitt der Schließbewegung eine erhöhte Gegenkraft zu erzeugen, die wiederum eine erhöhte Schließkraft bewirkt. Wenn sich das Schließelement so weit an den Ventilsitz angenähert hat, daß beide Ventilelemente sich in der Vorkontaktzone berühren, dann ist ein Durchtritt von Flüssigkeit durch den Spalt zwischen dem Schließelement und dem Ventilsitz nach wie vor möglich. Die Vorkontaktzone umfaßt nämlich nur einen Teilbereich des Berührungsbereichs zwischen Schließelement und Ventilsitz. Um das Schließelement weiter an den Ventilsitz annähern zu können, ist es allerdings erforderlich, das elastomere Element im Bereich der Vorkontaktzone zu komprimieren. Diese Kompression erfordert eine gewisse Kraft, die nun zusätzlich zu der bislang bekannten Schließkraft bereitgestellt werden muß. Für einen kleineren Durchfluß ist daher eine höhere Schließkraft erforderlich. Damit wird auf einfache Weise eine progressive Ventilkennlinie erzeugt (Signal-/Q- oder Signal-/Durchfluß-Zusammenhang).

Vorzugsweise steigt die Gegenkraft mit zunehmender Annäherung an. Dadurch ist es möglich, eine Ventilkennlinie zu erzeugen, die nicht nur zwei lineare Abschnitte aufweist. Vielmehr kann man einen kurvenförmigen Verlauf erzeugen, bei dem die Schließkraft bis zu einem vorbestimmten Endwert ansteigt. Je kleiner die Durchflußmenge ist, desto größer ist die erforderliche Schließkraft.

Vorzugsweise ist die Vorkontaktzone durch mindestens einen Vorsprung an einem Ventilelement gebildet, der in Richtung auf das andere Ventilelement vorsteht. Dies ist eine besonders einfache Ausgestaltung, um die Vorkontaktzone zu realisieren. Man kann beispielsweise den Vorsprung am elastomeren Element ausbilden. In diesem Fall wird dieser Vorsprung zusammengedrückt, wenn das elastomere Element am anderen Ventilelement zur Anlage kommt und weiter auf das andere Ventilelement zu bewegt wird. Zum Zusammendrücken dieses Vorsprungs ist die oben beschriebene Kraft erforderlich. Man kann den Vorsprung aber auch an dem Ventilelement ausbilden, der nicht das elastomere Element trägt. Wenn das elastomere Element beispielsweise am Schließelement angeordnet ist, dann kann man den Ventilsitz aus Metall ausbilden und mit dem Vorsprung versehen. Bevor nun das Schließ-element vollständig am Ventilsitz zur Anlage kommen kann, muß sich der metallene Vorsprung in das elastomere Element eindrücken. Auch dadurch wird die gewünschte progressive Ventilkennlinie erzeugt.

Vorzugsweise sind mehrere Vorsprünge vorgesehen, die symmetrisch zu einer Bewegungsachse des Schließelements angeordnet sind. Dadurch wird durch die Vorkontaktzone keine ungleichmäßige Kraftverteilung erzeugt, die bei der Lagerung des Schließelements auf Dauer zu Verschleiß führen könnte. Vielmehr sind die Vorsprünge so angeordnet, daß keine seitlichen Kräfte auf das Schließelement entstehen.

Vorzugsweise ist der Vorsprung aus dem gleichen Material gebildet, wie das ihn tragende Ventilelement. Dies erleichtert die Fertigung. Beispielsweise kann der Vorsprung beim Herstellen des elastomeren Elements gleich mitgeformt werden. Das gleiche gilt dann, wenn der Vorsprung an dem anderen Ventilelement angeordnet ist.

Bevorzugterweise verjüngt sich der Vorsprung zu seiner Spitze hin. Dies ist eine besonders einfache Möglichkeit, das Ventil so auszubilden, daß eine steigende Schließkraft entsteht. Um einen dünneren Teil des Vorsprungs zusammenzudrücken ist eine geringere Kraft erforderlich, als zum Komprimieren der Basis des Vorsprungs, die eine entsprechend größere Querschnittsfläche hat. Das gleiche gilt dann, wenn sich Metallvorsprünge in ein Elastomer eindrücken. Auch hier ist die erforderliche Kraft geringer, wenn der Querschnitt des Vorsprungs kleiner ist.

Bevorzugterweise weist die Betätigungseinrichtung eine Antriebseinrichtung mit einer Druck-Temperatur-Kenn-linie auf. Mit zunehmender Temperatur steigt damit die Kraft, mit der die Betätigungseinrichtung auf das Schließelement wirkt. Damit wird die Bewegung des Schließelements nichtlinear. Da dem Schließelement durch die Vorkontaktzone mit zunehmender Annäherung an den Ventilsitz eine steigende Gegenkraft entgegenwirkt, ergibt sich kein linearer Zusammenhang mehr zwischen der Temperatur und der Öffnungsweite des Ventils und damit dem Durchfluß. Damit läßt sich auf einfache Weise ein stabiler Regelkreis realisieren. Dieser ist zwar nicht unbedingt erforderlich, man erreicht aber einen größeren Arbeitsbereich.

Vorzugsweise ist die Antriebseinrichtung als Temperatur-Weg-Geber mit Gasfüllung ausgebildet. Eine Gasfüllung dehnt sich zwar mit der Temperatur aus. Da Gas aber kompressibel, ist der Weg der Antriebseinrichtung in Abhängigkeit von der Temperatur auch von der Gegenkraft bestimmt. Die Verwendung eines gasgefüllten Thermostatelements ermöglicht also die Ausbildung eines stabilen Regelkreises.

Die Erfindung wird im folgenden anhand von bevorzugten Ausführungsbeispielen in Verbindung mit der Zeichnung näher beschrieben. Hierin zeigen:

Fig. 1    eine schematische Darstellung eines Warmwasserventils,

Fig. 2    eine Draufsicht auf ein Schließelement,

Fig. 3    eine progressive Ventilkennlinie,

Fig. 4    eine erste Ausführungsform eines Ventilsitzes, der mit einem Schließelement zusammenwirkt,

Fig. 5    eine Schnittansicht des Schließelements und

Fig. 6    eine zweite Ausführungsform eines mit einem Ventilsitz zusammenwirkenden Schließelements.

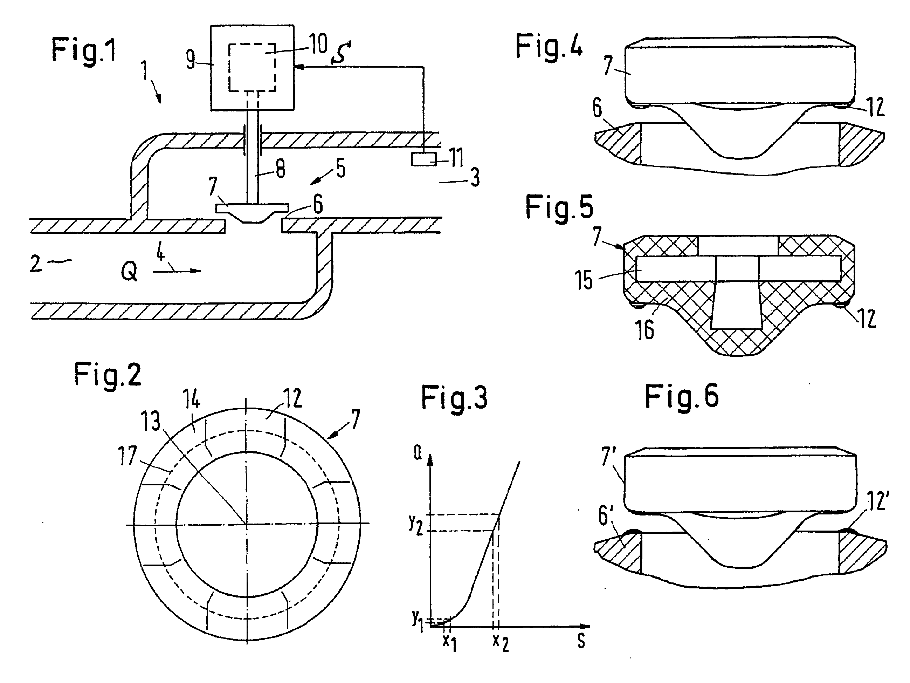

Fig. 1 zeigt ein Warmwasserventil 1, also ein Ventil zum Steuern einer Flüssigkeit, die von einem Eingang 2 zu einem Ausgang 3 in Richtung eines Pfeiles 4 fließt. Zwischen dem Eingang 2 und dem Ausgang 3 ist eine Schließeinrichtung 5 angeordnet, die einen Ventilsitz 6 und ein Schließelement 7 aufweist. Das Schließelement 7 ist über einen Stößel 8 von einer Betätigungseinrichtung 9 bewegbar. Die Betätigungseinrichtung 9 weist beispielsweise ein Thermostatelement 10 auf. Das Thermostatelement 10 ist im vorliegenden Fall als Temperatur-Weg-Geber mit Gasfüllung ausgebildet, d.h. es weist eine Druck-Temperatur-Kennlinie auf.

Der Betätigungseinrichtung 9 wird die Information über die Temperatur des durch das Ventil 1 strömenden Wassers über einen Temperaturfühler 11 vermittelt. Natürlich sind auch andere Möglichkeiten für die Erfassung und Weitergabe der Temperatur möglich. Das Ventil kann auch aufgrund anderer äußerer Einflußfaktoren gesteuert werden.

Wie in Fig. 3 schematisch dargestellt ist, möchte man eine progressive Ventilkennlinie erreichen können. Die progressive Ventilkennlinie bedeutet, daß in Abhängigkeit von einer Position eine Änderung eines Signals S zu unterschiedlichen Änderungen der Durchflußmenge Q führt. Wenn sich beispielsweise das Schließelement 7 schon relativ weit an den Ventilsitz 6 angenähert hat, dann soll eine Signaländerung X1 zu einer Durchflußänderung Y1 führen. Wenn das Schließelement 7 weiter von dem Ventilsitz 6 entfernt ist, dann soll eine gleich große Signaländerung X2 zu einer entsprechend größeren Durchflußänderung Y2 führen. Mit anderen Worten soll gelten:

$$\frac{Y1}{X1} < \frac{Y2}{X2}$$

Um diese Ventilkennlinie erzeugen zu können, ist eines der beiden Ventilelemente, d.h. entweder der Ventilsitz 6 oder das Schließelement 7 oder auch beide Ventilelemente mit einer Vorkontaktzone versehen. Die Vorkontaktzone ist in Fig. 2 schematisch dargestellt. Fig. 2 zeigt den Berührungsbereich zwischen dem Ventilsitz 6 und dem Schließelement 7. Im vorliegenden Fall ist die Vorkontaktzone am Schließelement 7 dargestellt. Deswegen zeigt Fig. 2 eine Draufsicht auf das Schließelement 7 vom Ventilsitz 6 her.

Das Schließelement 7 weist vier in Umfangsrichtung gleichmäßig verteilte Vorsprünge 12 auf, die punktsymmetrisch zu einer Achse 13 angeordnet sind. Das Schließelement 7 bewegt sich parallel zur Achse 13. Zwischen den Vorsprüngen 12 sind Lücken 14 freigelassen, durch die Flüssigkeit weiterströmen kann, selbst wenn das Schließelement 7 mit den Vorsprüngen 12 am Ventilsitz 6 anliegt. Sobald das Schließelement 7 am Ventilsitz 6 anliegt und weiter in Richtung auf den Ventilsitz 6 bewegt werden soll, müssen die Vorsprünge 12 komprimiert werden. Hierzu ist eine erhöhte Kraftanstrengung erforderlich. Die Vorsprünge 12 wirken also als Federelemente, die mit zunehmender Annäherung des Schließelements 7 an den Ventilsitz 6 eine der Schließbewegung entgegengerichtete Gegenkraft erzeugt. Diese Gegenkraft muß von der Betätigungseinrichtung überwunden werden, um das Schließelement 7 letztendlich dichtend am Ventilsitz 6 zur Anlage zu bringen. In diesem Fall sind die Vorsprünge 12 so zusammengedrückt, daß sich eine plane Anlage des Schließelements 7 am Ventilsitz 6 ergibt. An dieser Stelle sollte bemerkt werden, daß ein vollständiges Schließen des Ventils in vielen Fällen gar nicht erforderlich ist, beispielsweise dann, wenn das Ventil als Regelventil verwendet wird, das einen Volumenstrom regelt. Ein solcher Fall tritt beispielsweise auf, wenn das Ventil auf der Primärseite eines Wärmetauschers verwendet wird, der von einem Fernheizungsnetz gespeist wird.

Wie beispielsweise aus den Fig. 4 und 5 hervorgeht, haben die Vorsprünge 12 über ihre Höhe keinen gleichmäßigen Querschnitt. Vielmehr verjüngt sich jeder Vorsprung 12 zu seiner Spitze hin, also auf den Ventilsitz 6 zu. Dies hat zur Folge, daß die Kraft, die zum Zusammendrücken der Vorsprünge 12 bei der Schließbewegung erforderlich ist, am Anfang klein und am Ende der Schließbewegung groß ist. Dementsprechend steigt auch die Gegenkraft, die zum Schließen des Ventils 1 überwunden werden muß, an.

Fig. 5 zeigt einen schematischen Querschnitt durch das Schließelement 7. Das Schließelement 7 weist einen Kern 15 auf, der mit einem elastomeren Element 16 überzogen ist. Die Vorsprünge 12 sind einstückig mit dem elastomeren Element 16 ausgeformt.

Wie aus Fig. 2 zu erkennen ist, weiten sich die Lücken 14 radial nach außen auf. Eine Anlagelinie 17, die die Position des Ventilsitzes 6 bei Anlage des Schließelements 7 darstellt, verläuft radial etwas außerhalb von der engsten Stelle der Lücken 14 in Umfangsrichtung. Dadurch wird sichergestellt, daß ein relativ freies Abströmen der Flüssigkeit aus dem Spalt zwischen dem Ventilsitz 6 und dem Schließelement 7 möglich ist, solange das Schließelement 7 noch nicht vollständig am Ventilsitz 6 zur Anlage gekommen ist.

Fig. 6 zeigt eine abgewandelte Ausgestaltung. Hier sind Teile, die denen der Fig. 1 bis 5 entsprechen, mit gestrichenen Bezugszeichen versehen.

Im Gegensatz zur Ausführungsform der Fig. 4 sind nunmehr die Vorsprünge 12' nicht mehr am Schließelement 7', sondern am Ventilsitz 6' angeordnet und einstückig mit dem Ventilsitz 6' ausgebildet, d.h. die Vorsprünge 12' sind aus dem gleichen Material gebildet, wie der Ventilsitz 6'. Sie können also aus einem Metall gebildet sein.

Bei einer Schließbewegung drücken sich dann die Vorsprünge 12' in das elastomere Element 16 des Schließ-elements 7' ein, was im Grunde die gleiche technische Wirkung hat, d.h. die Vorsprünge 12' müssen einen entsprechenden Bereich im elastomeren Element 16 verdrängen, wozu eine gewisse Kraft erforderlich ist. Diese Kraft muß als Gegenkraft überwunden werden, um das Schließelement 7' zur Anlage an den Ventilsitz 6' zu bringen.

Natürlich ist es auch möglich, sowohl am Schließelement 7, 7' als auch am Ventilsitz 6, 6' Vorsprünge auszubilden. Dies ist nicht näher dargestellt.

**Patentansprüche**

1. Flüssigkeitssteuerventil, insbesondere Warmwasserventil, mit zwei Ventilelementen, nämlich einem Ventilsitz und einem mit dem Ventilsitz in einem Berührungsbereich zusammenwirkenden Schließelement, und einer Betätigungseinrichtung, wobei eines der beiden Ventilelemente zumindest auf seiner dem anderen Ventilelement zugewandten Seite mit einem elastomeren Element versehen ist, und von den beiden Ventilelemente zumindest eines eine Vorkontaktzone aufweist, in der eine Berührung zwischen dem Ventilsitz und dem Schließelement auf einen vorbestimmten Teilbereich des Berührungsbereichs beschränkt ist, die ein vorbestimmtes Verformungsverhalten aufweist und einer Annäherung von Schließelement und Ventilsitz eine vorbestimmte Gegenkraft entgegensetzt **dadurch gekennzeichnet, daß** bei der Berührung der beiden Ventilelemente (6, 7; 6', 7') außerhalb des Teilbereichs ein einen Fluid-Durchtritt erlaubender Spalt zwischen dem Schließelement (7, 7') und dem Ventilsitz (6, 6') ausgebildet ist.

2. Ventil nach Anspruch 1, **dadurch gekennzeichnet, daß** die Gegenkraft mit zunehmender Annäherung ansteigt.

3. Ventil nach Anspruch 1 oder 2, **dadurch gekennzeichnet, daß** die Vorkontaktzone (12, 12') durch mindestens einen Vorsprung an einem Ventilelement (6, 7; 6', 7') gebildet ist, der in Richtung auf das andere Ventilelement (7, 6; 7', 6') vor steht.

4. Ventil nach Anspruch 3, **dadurch gekennzeichnet, daß** mehrere Vorsprünge vorgesehen sind, die symmetrisch zu einer Bewegungsachse (13) des Schließelements (7, 7') angeordnet sind.

**5.** Ventil nach Anspruch 3 oder 4, **dadurch gekennzeichnet, daß** der Vorsprung aus dem gleichen Material gebildet ist, wie das ihn tragende Ventilelement (6', 7).

**6.** Ventil nach einem der Ansprüche 3 bis 5, **dadurch gekennzeichnet, daß** sich der Vorsprung zu seiner Spitze hin verjüngt.

**7.** Ventil nach einem der Ansprüche 1 bis 6, **dadurch gekennzeichnet, daß** die Betätigungseinrichtung (9) eine Antriebseinrichtung (10) mit einer Druck-Temperatur-Kennlinie aufweist.

**8.** Ventil nach Anspruch 7, **dadurch gekennzeichnet, daß** die Antriebseinrichtung (10) als Temperatur-Weg-Geber mit Gasfüllung ausgebildet ist.

**Claims**

**1.** Liquid control valve, particularly hot water valve, with two valve elements, namely a valve seat and a closing element interacting with the valve seat in a contact area, and an actuating device, one of the two valve elements being, at least on the side facing the other valve element, provided with an elastomeric element, and at least one of the valve elements having a pre-contact zone, in which a contact between the valve seat and the closing element is limited to a predetermined partial area of the contact area that has a predetermined deformation behaviour and provides a predetermined counterforce against an approach between closing element and valve seat, **characterised in that** outside the partial area a gap is formed between the closing element (7, 7') and the valve seat (6, 6'), said gap permitting a fluid passage, when the two valve elements (6, 7; 6', 7') touch.

**2.** Valve according to claim 1, **characterised in that** the counterforce increases at increasing approach.

**3.** Valve according to claim 1 or 2, **characterised in that** the pre-contact zone (12, 12') is formed by at least one projection on a valve element (6, 7; 6', 7') that projects in the direction of the other valve element (7, 6; 7', 6').

**4.** Valve according to claim 3, **characterised in that** several projections are provided, which are located symmetrically in relation to a movement axis (13) of the closing element (7, 7').

**5.** Valve according to claim 3 or 4, **characterised in that** the projection is made of the same material as the valve element (6', 7) carrying it.

**6.** Valve according to one of the claims 3 to 5, **charac-** terised in that the projection tapers in the direction of its peak.

**7.** Valve according to one of the claims 1 to 6, **characterised in that** the actuating device (9) has a driving device (10) with a pressure-temperature characteristic curve.

**8.** Valve according to claim 7, **characterised in that** the driving device (10) is a temperature displacement transducer with gas filling.

**Revendications**

**1.** Vanne de commande de fluide, en particulier vanne pour eau chaude, comprenant deux éléments de vanne, à savoir un siège de vanne et un élément de fermeture qui coopère avec le siège de vanne dans une zone de contact, et comprenant un dispositif d'actionnement, l'un des deux éléments de vanne étant doté, au moins sur son côté tourné vers l'autre élément de vanne, d'un élément en élastomère et, parmi les deux éléments de vanne, l'un au moins comportant une zone de précontact dans laquelle un contact entre le siège de vanne et l'élément de fermeture est limité à une zone partielle prédéfinie de la zone de contact, qui présente un comportement de déformation prédéfini et qui oppose à un rapprochement de l'élément de fermeture et du siège de vanne une force antagoniste prédéfinie, **caractérisée en ce que**, lors du contact des deux éléments de vanne (6, 7 ; 6', 7') à l'extérieur de la zone partielle, il se forme entre l'élément de fermeture (7, 7') et le siège de vanne (6, 6') un intervalle permettant une traversée d'un fluide.

**2.** Vanne selon la revendication 1, **caractérisée en ce que** la force antagoniste augmente au fur et à mesure du rapprochement.

**3.** Vanne selon la revendication 1 ou 2, **caractérisée en ce que** la zone de précontact (12, 12') est formée par au moins une saillie sur un élément de vanne (6, 7 ; 6', 7') qui dépasse en direction de l'autre élément de vanne (7, 6 ; 7', 6').

**4.** Vanne selon la revendication 3, **caractérisée en ce qu'**il est prévu plusieurs saillies qui sont agencées symétriquement par rapport à un axe de déplacement (13) de l'élément de fermeture (7, 7').

**5.** Vanne selon la revendication 3 ou 4, **caractérisée en ce que** la saillie est réalisée avec le même matériau que celui de l'élément de vanne (6', 7) qui la porte.

**6.** Vanne selon l'une des revendications 3 à 5, **carac-**

**térisée en ce que** la saillie va en se rétrécissant vers sa pointe.

7. Vanne selon l'une des revendications 1 à 6, **caractérisée en ce que** le dispositif d'actionnement (9) comporte un moyen d'entraînement (10) avec une ligne caractéristique pression/température.

8. Vanne selon la revendication 7, **caractérisée en ce que** le moyen d'entraînement (10) est réalisé sous la forme d'un générateur température/course avec remplissage en gaz.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2341223 A